(19) Europäisches Patentamt
European Patent Office
Office européen des brevets

(11) Veröffentlichungsnummer : **0 236 845 B1**

(12) **EUROPÄISCHE PATENTSCHRIFT**

(45) Veröffentlichungstag der Patentschrift :
30.01.91 Patentblatt 91/05

(51) Int. Cl.$^5$ : **B65G 67/60, B65G 21/14**

(21) Anmeldenummer : 87102631.6

(22) Anmeldetag : 24.02.87

(54) Steilförderer, insbesondere für die Schiffsentladung.

(30) Priorität : 12.03.86 DE 3608116

(43) Veröffentlichungstag der Anmeldung :
16.09.87 Patentblatt 87/38

(45) Bekanntmachung des Hinweises auf die
Patenterteilung :
30.01.91 Patentblatt 91/05

(84) Benannte Vertragsstaaten :
CH FR GB LI SE

(56) Entgegenhaltungen :
GB-A- 1 112 537
US-A- 1 421 787

(56) Entgegenhaltungen :
PATENT ABSTRACTS OF JAPAN, Band 5, Nr.
183 (M-97)[855], 21. November 1981; & JP - A -
56 103 033 (ISHIKAWAJIMA HARIMA
JUKOGYO) 17.08.1981
PATENT ABSTRACTS OF JAPAN, Band 9, Nr.
84 (M-371)[1807], 13. April 1985; & JP - A - 59
212 324 (SUMITOMO JUKIKAI KOGYO)
01.12.1984
PATENT ABSTRACTS OF JAPAN, Band 8, Nr.
189 (M-321)[1626], 30. August 1984; & JP - A -
59 78012 (ISHIKAWAJIMA HARIMA JUKOGYO)
04.05.1984

(73) Patentinhaber : Fried. Krupp Gesellschaft mit
beschränkter Haftung
Altendorfer Strasse 103
D-4300 Essen 1 (DE)

(72) Erfinder : Kostrewa, Ludwig
Ludwig-Richter-Ring 24
D-4130 Moers 1 (DE)

## Beschreibung

Die Erfindung bezieht sich auf einen mit einem selbstschöpfenden Becherwerk o. dgl. versehenen Steilförderer insbesondere für die Schiffsentladung, der einen oberen feststehenden oder um eine senkrechte Achse schwenkbaren Teil aufweist, an dessen unterem Ende ein mit dem oberen Teil mit einer Verstelleinrichtung verbundener ausschwenkbarer Teil angelenkt ist, und beide Trume des Becherwerks im Bereich der Anlenkung ausschwenkseitig durch Führungen gestützt und so geführt sind, daß der in ausgeschwenkter Stellung untere Trum des ausschwenkbaren Teils ansteigend fördert, wobei der ausschwenkbare Teil an seinem unteren Ende einen in einer horizontalen Achse angelenkten in Ausschwenkrichtung vorspringenden Fußteil aufweist, welcher über ein an ihm angreifendes Verbindungsglied vom oberen Teil gehalten wird.

Ein mit Becherwerk versehener Steilförderer ist vorbekannt aus der japanischen Gebrauchsmusterschrift 82/3736. Der untere ausschwenkbare Teil dieses Steilförderers ist nur zwischen zwei unterschiedlichen Schräglagen um einen begrenzten Winkel schwenkbar und kann daher mit voller Leistung Schüttgut lediglich an entsprechend schrägen Böschungsflächen aufnehmen. Außerdem ist die seitliche Ausladung seines unteren Teils so gering, daß tiefe seitliche Nischen, wie sie insbesondere bei der Schiffsentladung häufig vorkommen, nicht erreicht werden können.

Eine Fortentwicklung des vorgenannten Steilförderers ist aus der JP-A-56 103 033 bekannt geworden. Obwohl dieser neuere Steilförderer einen ausschwenkbaren unteren Teil aufweist, an den sich - angelenkt - ein seitlich vorspringender Fußteil anschließt, gilt auch für diesen Steilförderer wieder, daß vor allem der untere Teil nur um einen eng begrenzten Winkel schwenkbar ist. Die Aufhängung des unteren Teils und des Fußteils an Seilwinden dient bei diesem Gerät in erster Linie dazu, den schürfenden Eimerkettentrum ständig in Kontakt mit dem aufzunehmenden Schüttgut zu halten und dabei Schlingerbewegungen des Schiffes auszugleichen. Eine feste Einstellbarkeit des Fußteils ist nicht vorgesehen.

Der Erfindung liegt die Aufgabe zugrunde, einen Steilförderer der eingangs genannten Art zu schaffen, mit dem praktisch alle Rückladeaufgaben, wie sie insbesondere in der Schiffsentladung auftreten, ohne wesentliche Leistungseinbußen durchgeführt werden können.

Diese Aufgabe ist dadurch gelöst, daß der Fußteil über die an der Ausschwenkseite angeordnete horizontale Achse mit dem ausschwenkbaren Teil und über eine weitere horizontale Achse die an der der Ausschwenkseite gegenüberliegenden Seite angeordnet ist, mit einem der beiden anderen Teile (ausschwenkbarer Teil bzw. oberer Teil) durch einen starren oder längenverstellbaren Lenker so verbunden ist, daß er in jeder Ausschwenkstellung horizontal fixiert bzw. einstellbar ist.

Ein Steilförderer für die Schiffsentladung, der einen wesentlichen Teil der Merkmale nach der Erfindung aufweist, ist zwar bereits vorbekannt aus der DE-OS 31 50 562, dieser Schiffsentlader weist jedoch nicht einen, sondern zwei ausschwenkbare an ihrem unteren Ende mit einem angelenkten Fußteil versehene untere Teile auf, die symmetrisch zueinander angeordnet und in dieser Anordnung nur um einen geringen Winkel ausspreizbar sind. Dieser Schiffsentlader ist damit aufwendig gestaltet und in seinen Einsatzmöglichkeiten begrenzt.

Die Erfindung bringt den Vorteil, daß der neue Steilförderer auch verhältnismäßig kleine Durchtrittsöffnungen, z.B. solche von Schiffsluken, passieren kann und von hier aus in allen Richtungen eine große Ausladung erreicht. Dadurch, daß dabei der Fußteil horizontal gehalten wird, kann eine wirtschafliche Arbeitsweise unter Einhaltung einer horizontalen Schüttgutoberfläche erzielt werden.

Als Becherwerke können alle zum Gutaufnehmen geeigneten, mit Eimern o. dgl. Behältern versehene Endlosketten, oder andere Gliederbänder eingesetzt werden.

Vorteilhafte Ausgestaltungen der Erfindung sind in den Ansprüchen 2 bis 8 wiedergegeben.

Die Erfindung wird nachfolgend anhand der in der Zeichnung schematisch wiedergegebenen Ausführungsbeispiele näher erläutert.

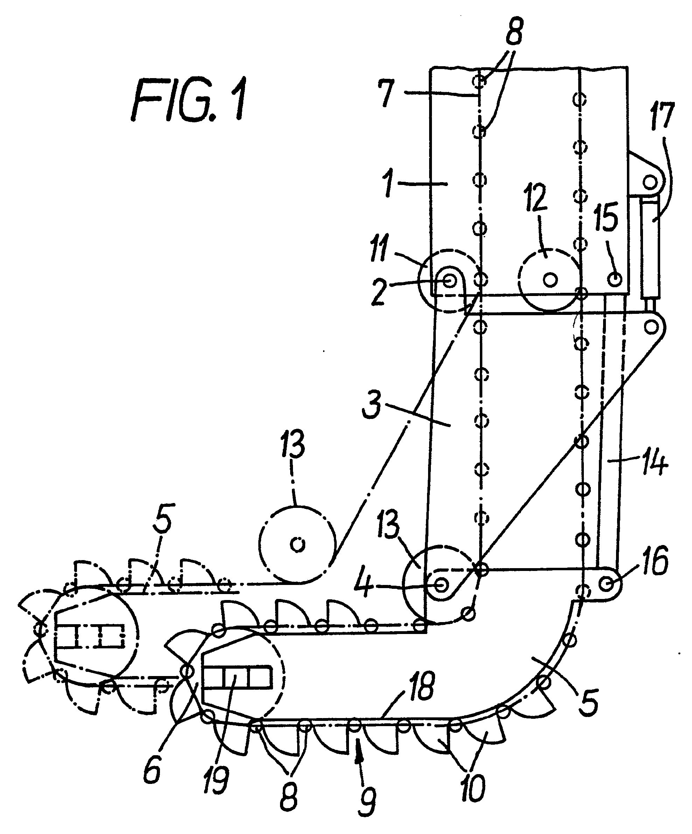

Die Figuren 1 bis 3 zeigen jeweils in Seitenansicht ein Ausführungsbeispiel eines Schiffsentladers, dessen Aufhängung seines oberen Teils an einer Kranbrücke oder einem Kranausleger nicht dargestellt ist.

Der als Steilförderer ausgebildete Schiffsentlader nach Fig. 1 weist einen sich senkrecht erstreckenden und um eine senkrechte Achse schwenkbaren Oberteil 1 auf, an welchem ein um eine horizontale Achse 2 schwenkbarer, in Ansicht etwa die Form eines Dreiecks aufweisender und dabei nach unten spitz zulaufender ausschwenkbarer unterer Teil 3 angelenkt ist. Am unteren Ende des unteren Teils 3 ist um eine horizontale Achse 4, die zur Achse 2 parallel liegt, ein Fußteil 5 schwenkbar angelenkt, welches in der Ausschwenkrichtung des unteren Teils 3 vorspringt und am äußeren Ende mit einer Umlenkrolle 6 versehen ist.

Ein mit an seiner Gliederkette 7 angeordneten Rollen 8 versehenes Becherwerk 9, das sich über die gesamte Länge des Steilförderers erstreckt, ist so geführt, daß seine beiden Trume im wesentlichen gleichen Abstand voneinander beibehalten. Die Rollen 8 sind jeweils zwischen zwei Bechern und an den einander zugewandten Enden der Becher 10 des Becherwerks 9 beidseitig an diesem angeordnet. Im Bereich der oberen Anlenkung des unteren Teils 3 sind am oberen Teil 1 zwei jeweils als Turas ausgebildete Umlenkrollen 11 und 12 so gelagert, daß sie die beiden Trume des Becherwerks beim Ausschwenken stützen und ihre Achsen in einer horizontalen Ebene mit der Achse 2 liegen. Ebenfalls an der Ausschwenkseite ist im Bereich der Anlenkung zwischen Fußteil 5 und unterem Teil 3 eine weitere als Turas ausgebildete Umlenkroller 13 am Fußteil 5 gelagert. Sämtliche Umlenkrollen weisen jeweils zwei mit der Gliederkette in Eingriff stehende Turas-Scheiben auf.

An der der Ausschwenkseite des Steilförderers gegenüberliegenden Seite ist ein scheibenförmiger oder aus Fachwerk gebildeter Lenker 14 angeordnet, der mit dem oberen Teil 1 über eine horizontale Achse 15 und mit dem Fußteil 5 über eine horizontale Achse 16 verbunden ist. Der Abstand zwischen den Achsen 15 und 16 einerseits und zwischen den Achsen 15 und 2 bzw. 16 und 4 andererseits ist so gewählt, daß ein Gelenkparallelogramm entsteht, so daß der Fußteil 5 beim Ausschwenken stets eine horizontale Lage beibehält, wie durch eine strichpunktiert gezeigte Ausschwenklage angedeutet ist. Das Ausschwenken wird bewirkt durch ein Hydraulikzylinderpaar 17, das außerhalb des Lenkers 14 am oberen Teil 1 sowie am unteren Teil 3 angelenkt ist.

Der Fußteil 5 weist an seiner Unterseite für die Führung der Rollen 8 Führungsschienen 18 auf, die ausgehend von der Umlenkrolle 6 zunächst horizontal und anschließend im Bogen nach oben ansteigend verlaufen. Die Führungsschienen 18 stützen das Becherwerk 9 bein Schöpfvorgang ab und dienen im Bogenbereich seiner Führung. Die Straffhaltung des Becherwerks 9 wird durch eine Spannvorrichtung 19 bewirkt, mit welcher die Umlenkroller 6 in Richtung der Längerstreckung des Fußteils 5 verstellbar ist. Die Spannvorrichtung weist ein auf die Achse der Umlenkrolle 6 wirkendes Hydraulikzylinder-Paar auf, das zum Schutz gegen Verkantung mit einer mechanisch oder elektrisch gesteuerten Gleichlaufeinrichtung versehen ist. Die Spannvorrichtung 19 bewirkt eine ständig konstante Spannung in der Gliederkette 7 dadurch, daß der Öldruck in ihren Hydraulikzylindern durch eine entsprechende Regeleinrichtung konstant gehalten wird. Dadurch ergeben sich beim Ausschwenken bei konstanter Spannung in der Gliederkette 7 unterschiedliche Stellungen der Umlenkrolle 6.

Im Normalfall beträgt die Auslenkung des unteren Teils 3 aus der Strecklage nicht mehr als etwa 30°. Durch entsprechende konstruktive Gestaltung kann der untere Teil 3 für besondere Fälle auch soweit ausgeschwenkt werden, daß die Achse 4 der unteren Anlenkung nahezu die gleiche Höhenlage wie die Achse 2 der oberen Anlenkung aufweist. Die Hydraulikzylinder des Hydraulikzylinder-Paares 17 sind dabei am oberen Teil 1 jeweils außen vorbeigeführt. Der untere Teil 3 kann aber auch über die Strecklage, die eine senkrechte Stellung der Trume des Becherwerks im Bereich des unteren Teils bedeutet, hinaus zurückgeschwenkt werden, so daß die seitliche Ausladung des Fußteils 5 verringert wird, und damit auch engere Durchtrittsöffnungen passiert werden können. Zum gleichen Zweck kann jedoch auch der obere Teil 1 schwenkbar aufgehängt werden, womit außerdem bei einem Verschwenken in die Ausschwenkrichtung die Ausladung des Senkrechtförderers noch vergrößert werden kann.

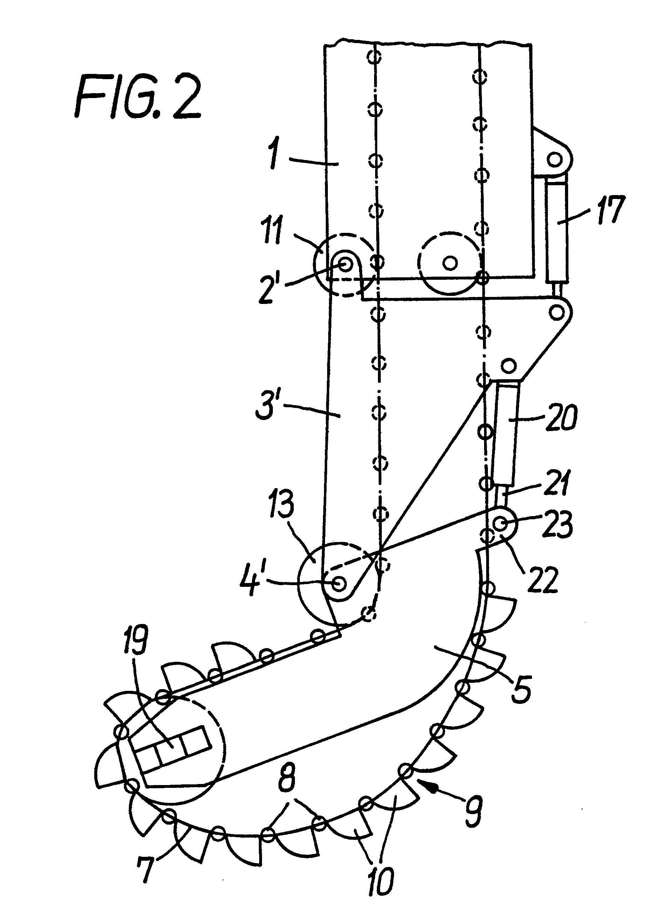

Beim Ausführungsbeispiel nach Fig. 2 sind der obere Teil 1 und der Fußteil 5 in gleicher Weise wie beim vorhergehenden Ausführungsbeispiel aufgebaut und dementsprechend auch mit den gleichen Umlenkrollen 11 und 12 bzw. 13 versehen. Der untere Teil 3', der in Ansicht ebenfalls etwa Dreiecksform aufweist, ist mit einer Achse 2', die mit der Achse der Umlenkroller 11 identisch ist, am oberen Teil und mit einer Achse 4', die mit der Achse der Umlenkrolle 13 zusammenfällt, am Fußteil 5 angelenkt. Der untere Teil 3' ist gleichfalls mittels eines Hydraulikzylinderpaares 17 ausschwenkbar. An der der Ausschwenkseite gegenüberliegenden Seite ist am unteren Teil 3' ferner ein Hydraulikzylinder-Paar 20 angelenkt, dessen Kolbenstangen 21 an einem Vorsprung 22 in einer horizontalen Achse 23 am Fußteil 5 angelenkt sind. Eine geeignete Steuereinrichtung bewirkt, daß beim Ausschwenken des unteren Teils 3' die Zylinderpaare 17 und 20 in einem solchen Geschwindigkeitsverhältnis ausgefahren werden, daß der Fußteil 5 seine waagerechte Lage stets beibehält. Das gleiche gilt beim Einfahren der Hydraulikzylinder während des Zurückschwenkens. Die Anordnung des Hydraulikzylinder-Paares 20 ermöglicht es, daß, wie in Fig. 2 dargestellt, das äußere Ende des Fußteils 5 abgesenkt werden kann. Dadurch ergibt sich an der Unterseite des Fußteils 5 ein Durchhängen des Becherwerks 9, wodurch bei der Aufnahme eines Restes von Schüttgut vom Boden die Becher ohne Zerstörungsgefahr den Boden überstreichen können. Außerdem können durch die durch das Absenken erzielte Verringerung der Ausladung über das mögliche Zurückschwenken über die Strecklage hinaus noch engere Durchtrittsöffnungen passiert werden.

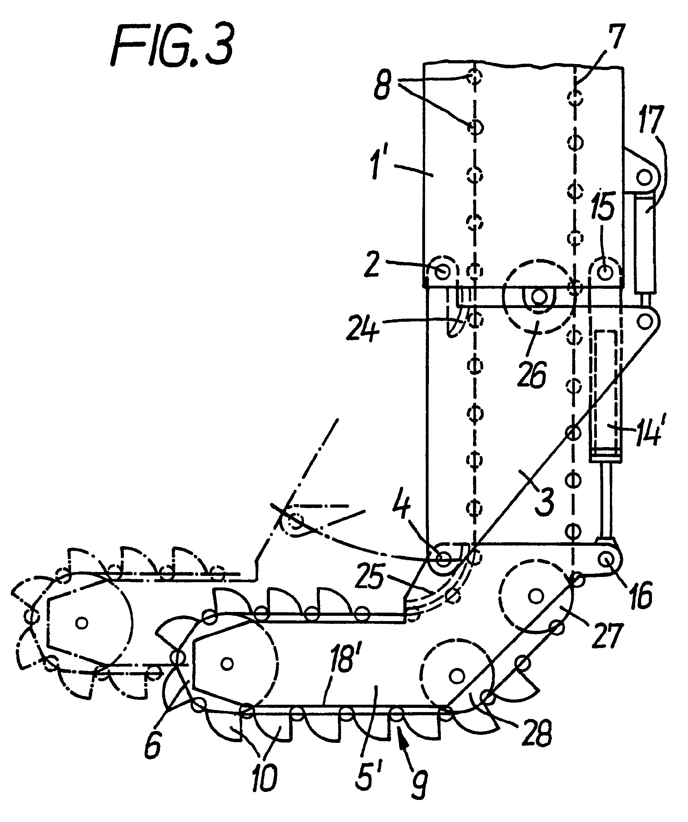

Das Ausführungsbeispiel eines Schiffsentladers nach Fig. 3 weist in Übereinstimmung mit dem nach Fig. 1 wieder eine Parallelogrammanlenkung des Fußteils 5' auf. Dementsprechend ist der untere Teil 3 über eine entsprechende Achse 2 am oberen Teil 1' und über eine Achse 4 am Fußteil 5' angelenkt. Zum Ausschwenken dient wieder ein Hydraulikzylinder-Paar 17. Der mit den horizontalen Achsen 15 und 16 am Oberteil 1' bzw. am Fußteil 5' angelenkte Lenker 14' ist als Hydraulikzylinder-Paar ausgebildet und in der Lage, den Fußteil 5' gegenüber seiner horizontalen Lage anzuheben, in erster Linie jedoch abzusenken. Im Bereich der horizontalen Achsen 2 und 4 befinden sich jeweils bogenförmige Führungen 24 und 25 zur Abstützung des an der Ausschwenkseite verlaufenden Trumes des Becherwerks 10. Die obere Führung 24 ist am oberen Teil 1' und die untere Führung 25 am Fußteil 5' angeordnet. Die Lage der Bögen ist dabei so gewählt, daß zwischen der Strecklage und der größten Ausschwenkstellung die auf den Führungen abrollende Gliederkette 7 stets zumindest auf einem Teil des Bogens anliegt. Der andere ansteigende Trum des Becherwerks wird über Umlenkrollen 26, 27 und 28 geführt. Die Umlenkrolle 26 ist etwas unterhalb der horizontalen Achse 2' im oberen Teil 1' gelagert, während die Umlenkrollen 27 und 28 am Fußteil 5' so gelagert sind, daß die Umlenkrolle 27 in der Strecklage die senkrechte Stellung des ansteigenden Trums des Becherwerks 10 begrenzt und zwischen der Umlenkrolle 27 und der unteren Umlenkrolle 28 in der Strecklage der ansteigende Trum etwa unter 45° in seiner Richtung abgelenkt ist. Die untere Umlenkrolle 2 begrenzt gleichzeitig die an der Unterseite des Fußteils 5' verlaufenden Schienen 18'. Die Umlenkrollen 26, 27 und 28 weisen wieder zwei Turas-Scheiben für die Gliederkette 7 auf, die durch eine im nicht dargestellten Kopfteil des oberen Teils 1' angeordnete Spannvorrichtung beim Ausschwenken wie in den beiden anderen Ausführungsbeispielen die gleiche Spannung beibehält.

Die vorspringende Länge des Fußteils und die Länge des ausschwenkbaren unteren Teils bzw. das Verhältnis dieser beiden Längen hängt in erster Linie von den durch den Einsatzfall gegebenen Bedingungen ab. In der Regel ist aber der Fußteil etwa bis zum 3-fachen kürzer als der untere Teil, jedoch zumindest so lang, daß eine ausreichende Anzahl von Bechern an den horizontalen Führungsschienen anliegt, so daß dadurch die Becher im Betrieb hinreichend gefüllt werden.

## Ansprüche

1. Mit einem selbstschöpfenden Becherwerk (9) o.dgl. versehener Steilförderer, insbesondere für die Schiffsentladung, der einen oberen feststehenden oder um eine senkrechte Achse schwenkbaren Teil (1, 1') aufweist, an dessen unterem Ende ein mit dem oberen Teil mit einer Verstelleinrichtung verbundener ausschwenkbarer Teil (3, 3') angelenkt ist, und beide Trume des Becherwerks (9) im Bereich der Anlenkung ausschwenkseitig durch Führungen gestützt und so geführt sind, daß der in ausgeschwenkter Stellung untere Trum des ausschwenkbaren Teils (3, 3') ansteigend fördert, wobei der ausschwenkbare Teil (3, 3') an seinem unteren Ende einen in einer horizontalen Achse (4, 4') angelenkten in Ausschwenkrichtung vorspringenden Fußteil (5, 5') aufweist, welcher über ein an ihm angreifendes Verbindungsglied vom oberen Teil (1, 1') gehalten wird, **dadurch gekennzeichnet**, daß der Fußteil (5, 5') über die an der Ausschwenkseite angeordnete horizontale Achse (4, 4') mit dem ausschenkbaren Teil (3, 3') und über eine weitere horizontale Achse (16, 23), die an der der Ausschwenkseite gegenüberliegenden Seite angeordnet ist, mit einem der beiden anderen Teile (ausschwenkbarer Teil 3' bzw. oberer Teil 1, 1') durch einen starren oder längenverstellbaren Lenker (14, 14', 20) so verbunden ist, daß er in jeder Ausschwenkstellung horizontal fixiert bzw. einstellbar ist.

2. Steilförderer nach Anspruch 1, dadurch gekennzeichnet, daß zumindest eine der Führungen durch Umlenkrollen bzw. Umlenkrollenpaare (11, 13) gebildet ist.

3. Steilförderer nach Anspruch 1 oder 2, dadurch gekennzeichnet, daß der ausschwenkbare Teil (3) aus zwei, zusammen ein Gelenk-Parallelogramm bildenden Elementen (3, 14, 14') gebildet ist, und an einem (3) die mit dem Oberteil (1) verbundene Verstelleinrichtung (17) eingreift.

4. Steilförderer nach Anspruch 3, dadurch gekennzeichnet, daß einer der Elemente (Lenker 14') längenverstellbar ist.

5. Steilförderer nach Anspruch 1 oder 2, dadurch gekennzeichnet, daß der obere Teil (1) sowie der Fußteil (5) mit dem ausschwenkbaren Teil (3') jeweils über eine beidendig angelenkte Verstelleinrichtung verbunden ist.

6. Steilförderer nach einem der Ansprüche 3 bis 5, dadurch gekennzeichnet, daß die Verstelleinrichtungen zumindest zum Teil Hydraulikzylinder (17, 20) sind.

7. Steilförderer nach einem der vorhergehenden Ansprüche, dadurch gekennzeichnet, daß die Trume des Becherwerks (9) so geführt sind, daß sie zumindest im oberen Teil (1, 1') und im angelenkten Teil (3, 3') stets parallel zueinander verlaufen.

8. Steilförderer nach einem der vorhergehenden Ansprüche, dadurch gekennzeichnet, daß die am äußeren Ende des Fußteils (5) bzw. unteren Ende des ausschwenkbaren Teils angeordnete Umlenkrolle (6) in Richtung der ausladenden Längserstreckung des Fußteils (5) verstellbar ist.

## Claims

1. A vertical conveyor, more particularly for unloading ships, having a self-scooping bucket elevator (9) or the like and a top portion (1, 1') which is fixed or can pivot around a vertical axis and to whose bottom end an outwardly pivotable portion (3, 3') connected to the top portion via an adjusting device is articulated, both runs of the bucket elevator (9) being supported by guides on the outward pivoting side in the zone of the articulation and so guided that the run of the outwardly pivotable portion (3, 3') which is the lower run in the outwardly pivoted position conveys as it rises, the outwardly pivotable portion (3, 3')

having at its bottom end a base portion (5, 5') which is articulated in a horizontal pivot (4, 4') and which projects in the outwardly pivoting direction and is engaged with and retained by the top portion (1, 1') via a connecting member, characterized in that the base portion (5, 5') is so connected via the horizontal pivot (4, 4') disposed on the outwardly pivoting side to the outwardly pivotable portion (3, 3') and via a further horizontal pivot (16, 23) disposed on the side opposite the outwardly pivoting side to one of the other portions (outwardly pivoting portion 3' or top portion 1, 1' respectively) by a rigid or longitudinally adjustable link (14, 14', 20) that the base portion (5, 5') is horizontally fixed or adjustable in any outwardly pivoted position.

2. A vertical conveyor according to claim 1, characterized in that at least one of the guides is formed by deflecting rollers or pairs of deflecting rollers (11, 13).

3. A vertical conveyor according to claims 1 or 2, characterized in that the outwardly pivotable portion (3) is formed by two elements (3, 14, 14') which together form a parallelogram of links, the adjusting device (17) which is connected to the top portion (1) engaging with one (3) of said elements.

4. A vertical conveyor according to claim 3, characterized in that one of said elements (link 14') is longitudinally adjustable.

5. A vertical conveyor according to claims 1 or 2, characterized in that the top portion (1) and the base portion (5) are each connected to the outwardly pivotable portion (3') via an adjusting device articulated at both ends.

6. A vertical conveyor according to one of claims 3 to 5, characterized in that at least some of the adjusting devices are hydraulic cylinders (17, 20).

7. A vertical conveyor according to one of the preceding claims, characterized in that the runs of the bucket elevator (9) are so guided that they always extend parallel with one another, at least in the top portion (1, 1') and in the articulated portion (3, 3').

8. A vertical conveyor according to one of the preceding claims, characterized in that the deflecting roller (6) disposed at the outer end of the base portion (5) and the bottom end of the outwardly pivotable portion can be adjusted in the direction of the projecting longitudinal extension of the base portion (5).

## Revendications

1. Elévateur, notamment pour le déchargement des navires, qui comporte un transporteur à godets (9) à puisage automatique ou un dispositif analogue et qui comprend une partie supérieure (1, 1') qui est fixe ou peut tourner autour d'un axe vertical et sur l'extrémité inférieure de laquelle s'articule une partie inférieure pivotante (3, 3') qui est reliée à la partie supérieure par un dispositif permettant son mouvement, les deux brins du transporteur à godets (9) prenant appui, dans la zone de l'articulation, sur des dispositif de guidage situés du côté du pivotement et étant guidés de telle manière que c'est le brin qui se trouve en-dessous lorsque la partie pivotante (3, 3') est dans sa position de pivotement qui effectue le transport vers le haut et la partie pivotante (3, 3') comportant, à son extrémité inférieure, une partie inférieure (5, 5') qui s'articule sur un axe horizontal (4, 4') et s'étend en partie saillante dans la direction du pivotement et qui est maintenue par la partie supérieure (1, 1') par l'intermédiaire d'un organe de liaison qui agit sur elle, caractérisé en ce que la partie inférieure (5, 5') est reliée par l'intermédiaire de l'axe horizontal (4, 4') situé du côté du pivotement à la partie pivotante (3, 3') et par l'intermédiaire d'un autre axe horizontal (16, 23) situé du côté opposé au côté du pivotement à l'une des deux parties (partie pivotante 3' ou partie supérieure 1, 1') par un élément (14, 14', 20) rigide ou de longueur variable, de telle manière que, dans chaque position de pivotement, elle soit ou puisse être placée horizontalement.

2. Elévateur selon la revendication 1, caractérisé en ce que l'un au moins des dispositifs de guidage est constitué par des galets de renvoi ou des paires de galets de renvoi (11, 13).

3. Elévateur selon l'une des revendications 1 ou 2, caractérisé en ce que la partie pivotante (3) est constituée par deux éléments (3, 14, 14') constituant un parallélogramme articulé et agit sur un dispositif de déplacement (17) relié à la partie supérieure (1).

4. Elévateur selon la revendication 3, caractérisé en ce que l'un des éléments en question (barre 14') a une longueur variable.

5. Elévateur selon l'une des revendications 1 ou 2, caractérisé en ce que la partie supérieure (1) et la partie inférieure (5) sont reliées à la partie pivotante (3') chacune par l'intermédiaire d'un dispositif de déplacement qui s'articule des deux côtés.

6. Elévateur selon l'une des revendications 3 à 5, caractérisé en ce que les dispositifs de déplacement sont constitués au moins en partie par des vérins hydrauliques (17, 20).

7. Elévateur selon l'une des revendications précédentes, caractérisé en ce que les brins du transporteur à godets (9) sont guidés de telle manière qu'au moins dans la partie supérieure (1, 1') et dans la partie pivotante (3, 3') ils sont toujours parallèles l'un à l'autre.

8. Elévateur selon l'une des revendications précédentes, caractérisé en ce que le galet de renvoi (6) monté à l'extrémité extérieure de la partie inférieure (5) ou de l'extrémité inférieure de la partie pivotante peut être déplacé dans le sens de la longueur de la partie inférieure (5).

FIG. 1

FIG. 2

# FIG.3